# EUROPEAN PATENT APPLICATION

(11) **EP 4 822 422 A1**
(43) Date of publication of application: **14.10.2026**
(21) Application number: 26159648.0
(22) Date of filing: 27.11.2017
(51) Int. Cl.: G02B 27/01

(54) **IMMERSIVE OPTICAL PROJECTION SYSTEM**

(30) Priority: 26.09.2017 US 201715716503
(62) Document number(s) of the earlier application(s) in accordance with Art. 76 EPC: 17854159.5 / 3 516 446
(71) Applicant: Maynard, Ronald, Austin, Texas 78733 (US)
(72) Inventor: Maynard, Ronald, Austin, Texas 78733 (US)
(74) Representative: Cullinane, Marietta Bettina

(57) **Abstract**

The present disclosure relates to a virtual reality system that provides a photoreceptor density limiting, wide angle, full spectrum, binocular vision, real optical depth of fi eld, imaging system. In one head mounted version, the system utilizes a hybrid optical micromirror scanner that produces a modulated beam of light of variable divergence that can be steered with two degrees of freedom. This beam is subsequently reflected off a compound curved reflector and through additional optics to form a full depth of fi eld image on the retina. A high performance first surface reflector can also be fashioned from an array of independently steerable optical elements thereby forming an adaptive optical surface that provides a wide, full depth of fi eld image. In either case, a true depth of field is presented to the eye allowing for a natural crystalline lens accommodation response.

## Description

### Cross-Reference to Related Applications

This international patent application claims the benefit of US provisional patent application Ser. No. 62/399,530, filed on the 26th of September, 2016 and US non-provisional patent application Ser. No. 15/716,503, filed on the 26th of September, 2017 by the present inventor.

### Technical Field

The present disclosure relates to a virtual reality system that in one case, provides a photoreceptor density limiting, wide angle, full spectrum, binocular vision, real optical depth of field, imaging system in a head mounted form factor.

### Background Art

Many devices have been created to deliver optical information to the human eye. Visual information can take the form of high definition video, computer generated content, two and three dimensional content, text, etc. The visual component of a virtual reality system delivers synthetic content directly to the eye, whereas augmented reality systems blend generated content with real world views.

In nature, every illuminated particle reflects or emits rays of light in every direction and in a multitude of wavelengths. The rays that reach us from afar are nearly parallel and those that arrive from a nearby point are more divergent. The arriving beams that pass through our pupils are focused, or made more convergent, as they pass through the cornea, the aqueous humor, the crystalline lens, the vitreous humor and finally, arrive at the retina.

For normal vision, an image will be formed on a portion of the retina that is dependent on the entrance angle of the beam with respect to the optical axis of the eye, or direction of gaze. Those images that form in the central 2 degrees of vision fall on an area of the retina with an exceptionally high density of photoreceptor cells called the fovea. It is here that most of the high resolution visual information is converted from optical to electrical nerve impulses via the photoreceptors, and transmitted to the visual cortex via the optic nerve bundle. Photoreceptors further away from the fovea detect off axis images and contribute to the sense of peripheral vision. In total, there are approximately 15 million rod cell and cone cell photoreceptors. Rod cells detect low levels of light, but no color, and cone cells detect color, but at higher levels of light intensity. Three types of cone cells sensitive to red green and blue light, are predominantly found in the high density central area of the retina, thereby providing high resolution color vision.

Because central vision contains so much more information, the eye will rapidly "scan" or saccade when fixating on an important target, say a face or moving object, and jump to another at a rate of up to 1000 Hz. The eye can also "jitter" or micro saccade to provide continuous sensitization to the retina. The eye can rotate up/down and left/right about a central point at a speed of up to 900 degrees per minute. Although the eye can rotate in excess of 50 degrees in various directions, depending upon age, individuals rarely exhibit eye motions exceeding plus or minus 10 degrees from a straight ahead gaze.

An eye, with a fixed forward gaze, can detect light impinging on the cornea from and angle of nearly 110 degrees towards the temple, and about 59 degrees towards the nose. The field of vision also extends to approximately 56 degrees above and 70 degrees below the direction of gaze.

Monocular vision can provide moderate depth of field cues through motion parallax, kinetic rotations, shadows, familiar size, occultation, perspective, and accommodation or focus, to name a few.

Binocular vision allows for a wider field of view, improves acuity due to detail averaging between two images and provides visual cues for a much stronger sense of 3D depth perception. The primary binocular cues are stereopsis and the vergence-accommodation reflex. Stereopsis gives a sense of depth by processing slightly different left and right images that fall on the retinas. Although both eyes may converge on the same point of a 3D object, if that object is closer than 10 meters, then its shape, volume and shadows, having points nearer and further than the point of convergence, will project to slightly different horizontal positions on each retina. This slight, horizontal differential displacement, or "binocular disparity", is due to the horizontal parallax induced by eye separation, and is sensed by dedicated cells called "binocular cells", that are horizontally arranged near the center of vision. While vertical displacements due to shapes and shadows alone are also perceived, they are less impactful. All disparity information is then sent to the visual cortex, where the two images are fused as one, and some measure of depth is realized. A relative, rather than an absolute depth may be sensed in this way.

For objects closer than 2 meters, precise depth information is extracted via the vergence-accommodation reflex. For a close object, an approximate estimation of distance is perceived by stereopsis, thereby triggering an involuntary, simultaneous occurrence of three events; the eyes converge to a point of fixation on the object, the ciliary muscles contract which thickens the crystalline lens and increases its focusing power, and the pupils constrict, which increases the depth of field. An increase in focusing power brings the more divergent rays of a close object to a sharp focus on the retina. The amount of effort to achieve a good focus is observed by the proprioceptive sensors of the ciliary process, and is relayed to the visual cortex that derives a precise interpretation of focal distance. Similarly, kinesthetic information from the extraocular muscles that moved the eyes into a specific angle of convergence, coupled with a gaze angle, allows the visual cortex to extract a very precise distance via triangulation.

Finally, the vestibulo-ocular reflex is an interaction between the vestibular system that provides balance, spatial orientation and acceleration information, and the extraocular muscles that move the eyes about three axes of rotation. A movement of the head in one direction causes a reflexive counter move of the eyes in the opposite direction, thereby maintaining a stable image at the center of the visual field. This allows for fixed targeting of a stationary object during body motion or stable targeting of a moving object.

A typical movie projector produces a focused image on a curved or flat screen at a distance. A curved screen helps to improve the sense of immersion with a modest increase in peripheral vision. In both cases, the distant screen provides reflected parallel light beams that can easily be focused by the human eye, but lends little parallax or binocular information.

Viewing a distant screen with "3D" glasses can provide a sense of depth. These devices utilize various techniques to deliver a slightly different view angle to each eye. Most are limited by frame rate, brightness, and the production of a truly divergent ray field that a near object would produce. And of course, they are all subject to the flat field, limited resolution, limited dynamic range and limited angular extent of the distant screen. An improvement in field of view occurs when moving a screen closer while using 3D glasses. Although closer, the depth of focus remains constant and relaxed distant focus is lost. The field of view is also a small subset of the visual potential.

Additional information content can be added by a "heads up" display whereby information is projected on the surface of a visor or screen. Using a combination of scanners and optical elements, a virtual image can be produced at any apparent depth, but is usually limited by a narrow angle of view. Such information may overlay the true visual field. The overlay of a computer generated, or other video source on a true direct view of a scene falls in the realm of augmented reality.

Current Virtual Reality, Augmented Reality, and Mixed Reality systems attempt to provide a multitude of visual cues, including motion stabilized imaging, binocular vision, and a few discrete focal planes to give a better sense of realism. Most provide a modest field of view, and are limited in delivering continuous, truly divergent fields that are ubiquitous in the real world. These head mounted systems often have a bulky form factor, and are hard wired to a power source, a data processing unit, or a personal computer. More advanced models move image processing, wireless communications, and battery power onto the headset. A number of devices also incorporate motion sensors, outward looking cameras, external sensors to track one's movements, and inward looking cameras to track eye position. Recent mobile VR/AR/MR offerings have raised social concerns about privacy and obtrusiveness.

Prior art teaches many methods for determining the position of the pupil relative to the head. A commonly used form of gaze sensor consists of a remote or head mounted source of Infra-Red light that is projected towards the eye and a remote or head mounted camera that can observe the pupil position or the resulting reflection patterns from the cornea.

AR systems also suffer from limited control of the lighting environment. The real scene is directly passed through to the observer via a transparent screen and synthetic images are then overlaid on that scene. It is generally an additive process yielding translucent images. A problem occurs when attempting to overlay a dark simulated object onto a bright real background. When a beachgoer gazes through an AR headset and looks to the bright horizon, it is not possible to observe the overlay of a black containership. Nor is it possible to accurately control shadows.

In general, current devices are hampered by their inability to sufficiently synchronize precise head motions with stabilized imagery, producing a disturbing visual lag. This can be attributed, in part, to sensor deadband issues, software computation delays, digital content protection, and LCD switching speeds. What is observed does not agree with what motion, if any, is sensed by the vestibular system. Further, stereopsis cannot be fully achieved unless a true 3D image is presented to the eyes. In addition, virtual systems that do not synchronize binocular vision with natural depth of field cues create a vergence-accommodation conflict. All of these sensory conflicts can negatively affect the human vestibular and ocular systems resulting in disorientation and what is termed "virtual reality sickness".

Finally, systems that lack eye tracking capabilities are incapable of dynamic data allocation that can efficiently address the greater needs of central vision. Thus, systems of this type uniformly distribute their data bandwidth over the entire visual field requiring a greater computational load for a given resolution.

### Summary

In one embodiment, an improved virtual, augmented, or mixed reality total immersion system employs an optical system that delivers stimulation to the millions of rod and cone receptors of the retina in a way that can elicit an accurate vergence-accommodation reflex, produces stabilized images that are closely synchronized with the vestibulo-ocular reflex, creates lifelike binocular disparities that produce a faithful sense of stereopsis, and provides for a large color space and a physiological full field of view. A further enhanced embodiment may include immersive audio, a power source, additional environmental sensors, position sensors, motion sensors, inward and outward looking cameras or scanners, high speed data processing, communications, and can reduce manufacturing costs, be robust, have an attractive form factor, and have the ability to selectively deliver increased bandwidth and resolution to the central field of vision.

### Brief Description of Drawings

Figure 1 - Example of a Monolithically Micromachined Beam Steering Device
Figure 2 - Divergent Micro Lens
Figure 3 - Two Degree of Freedom Optical Scanner with Divergent Micro Lens
Figures 4, 5, 6 - Variable Focus Optical Element in Various States of Activation
Figure 7 - Quad Array of Optical Scanners
Figures 8 and 9 - Wide Angle Scanning Array Projector
Figure 10 - Immersive Optical Scanning System
Figure 11 - Eye Tracker
Figure 12 - Reflector Scanner Imaging System with Sealed Optics
Figure 13 - Isometric 3D View of the Reflector Scanner Imaging System
Figure 14 - Imaging of Near Objects and Accommodation
Figure 15 - Creating Real Images Exhibiting a True Depth of Field from Virtual Objects
Figure 16 - Single Degree Of Freedom V-Gap Optical Element
Figure 17 - Close-up detail of V-Gap Optical Element Hinge Area
Figure 18 - Small Cross Section of Adaptive Optics Reflector Array
Figure 19 - Fixed Array of Variable Focus Optical Elements
Figure 20 - Steerable Variable Focus Optical Element in a Convex State
Figure 21 - Steerable Variable Focus Optical Element in a Concave State
Figure 22 - Array of Steerable Variable Focus Optical Elements in a Concave State
Figure 23 - Array of Steerable Flat State Optical Elements
Figure 24 - Metamaterial Beam Steering Plates
Figure 25 - Metamaterial Beam Steering Plate Array
Figure 26 - Array of Micro Scanner Direct Projection Optical Elements
Figure 27 - System Integrating Glasses

### Description of Embodiments

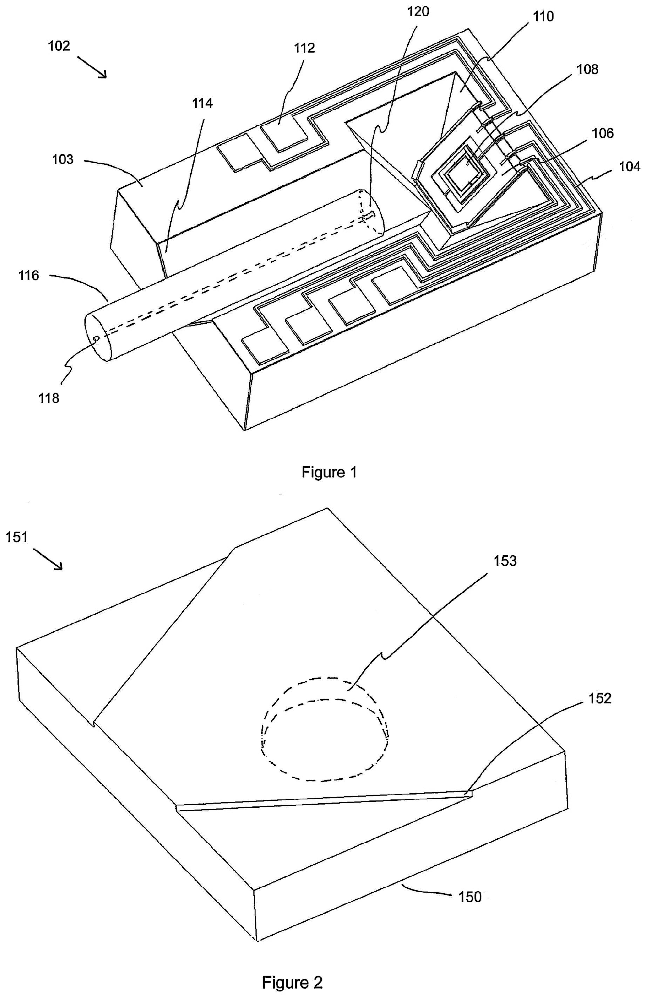

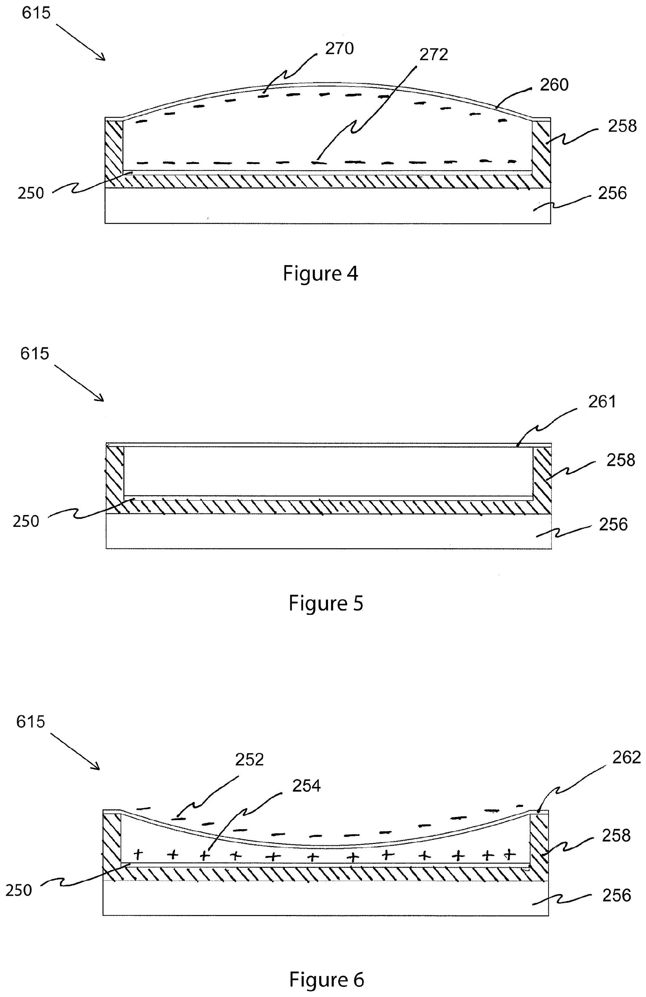

**Figure 1** shows an example of a monolithically micromachined beam steering device **102**. Its design and function is the subject of patents US 5,872,880, US 6,086,776, US 6,127,926, and US 7,201,824 B2. In one embodiment, light is first introduced into the core of optical element **116** at point **118** and is emitted at point **120**. The slightly divergent beam then travels a short distance through free space and strikes the surface of double gimbaled micromirror **108.** In another embodiment, an optical beam modifier, such as a ball lens, a GRIN lens, or any other optical element may be introduced after point **120** to further alter the beam before striking double gimbaled micromirror **108**. In another embodiment, an optical beam modifier may be introduced after striking micromirror **108**. Two additional examples of beam modifiers include an electrostatic comb driven, variable focus lens that dynamically controls beam divergence and has an optical axis that is aligned with v-groove **114**, and a Variable Focus Optical Element **615**, shown in Figures 4 through 6***.*** One way to arrange a VFOE **615** into a configuration such as Figure 1, would be to rotate optical element **116**, 90 degrees from its shown position such that a beam emanating from point **120** would strike a VFOE **615** at a 45 degree angle and proceed down the length of v-groove **114** towards micromirror **108**. Once striking micromirror **108**, the beam can be controllably directed away from surface **103**, with two degrees of freedom. It can be appreciated that there are an unlimited number of ways in which someone skilled in the art might arrange optical beam modifiers and optical elements to affect the equivalent operations on an emitted beam as it proceeds or departs from micromirror **108**.

The first and second nested gimbaled frames of double gimbaled micromirror assembly **106** can move independently, and in one embodiment, are driven with electrostatic forces between pads on each respective gimbaled frame and substrate walls **110**. In this example, an electrical control signal is introduced on bond pads **112**, causing current to flow through address lines **104,** that induces a charge profile between the electrostatic actuator pads and substrate walls **110**, resulting in electrostatic forces that direct micromirror assembly **106** into a predefined orientation. It can be appreciated that the angular motions and positions of micromirror **108** can be very precisely controlled by the manipulation of current, magnetism, charge, voltage potential, thermal expansion, shape memory effect, or any other controlled application of force.

In this one embodiment, the substrate of beam steering device **102** is fabricated from a silicon wafer having a (100) crystalline orientation. When exposed to an anisotropic etchant such as a heated potassium hydroxide solution, exposed silicon surfaces are vigorously etched until crystal plane orientations of <111> are reached, at which time, etching effectively ceases. These are the surfaces that define precision v-groove **114** and substrate walls **110**. Micromirror assembly **106** and its flexures are fabricated using standard Micro Electro Mechanical Systems processes such as photolithography, chemical vapor deposition, sputtering, and plasma etching, before being released by an anisotropic etch. The micromirror assembly **106**, is then deployed and fixed into the cavity defined by substrate walls **110**. The resulting atomic plane alignment between v-groove structures provides for a highly accurate alignment between the optical axis of optical element **116** and the center of micromirror **108**. It can be appreciated that optical element **116** could take any optical assembly form including a small laser, LED, incandescent light source, or perhaps a laser and GRIN lens combination. In another embodiment, a double gimbaled laser diode could replace double gimbaled micromirror assembly **106** and directly produce a multi degree of freedom steerable beam.

Given the proper size constraints, many miniaturized beam steering devices, or image projection devices, having the ability to project a two dimensional image could be an equivalent substitute for beam steering device **102**. For example, a double bounce off a suitable combination of two, single degree of freedom steerable micromirrors could produce the two degree of freedom beam steering behavior as well. Similarly, a linear array of independently modulated beams could be steered in a direction transverse to its length with a single degree of freedom micromirror, and so on.

**Figure 2** shows optical element **151** configured as a high Numerical Aperture (NA) negative lens. The lower surface **150**, exhibits a hollowed out hemispherical section **153**, while the upper surface is flat, although both the upper and lower surfaces could take any shape, including concave, convex, or flat, and may be constructed from any optical material exhibiting refraction, reflection, metamaterial properties, birefringence, total internal reflection, or any other optical property. In this particular example, one possible function of optical element **151** could be to increase the total scan angles produced by micromirror **108**. It can be appreciated that additional optics may be placed after optical element **151** to further modify a beam. In one embodiment, registration edges **152** are etched into the upper surface of optical element **151** to provide accurate assembly alignment for additional optics such as turning prism **350**.

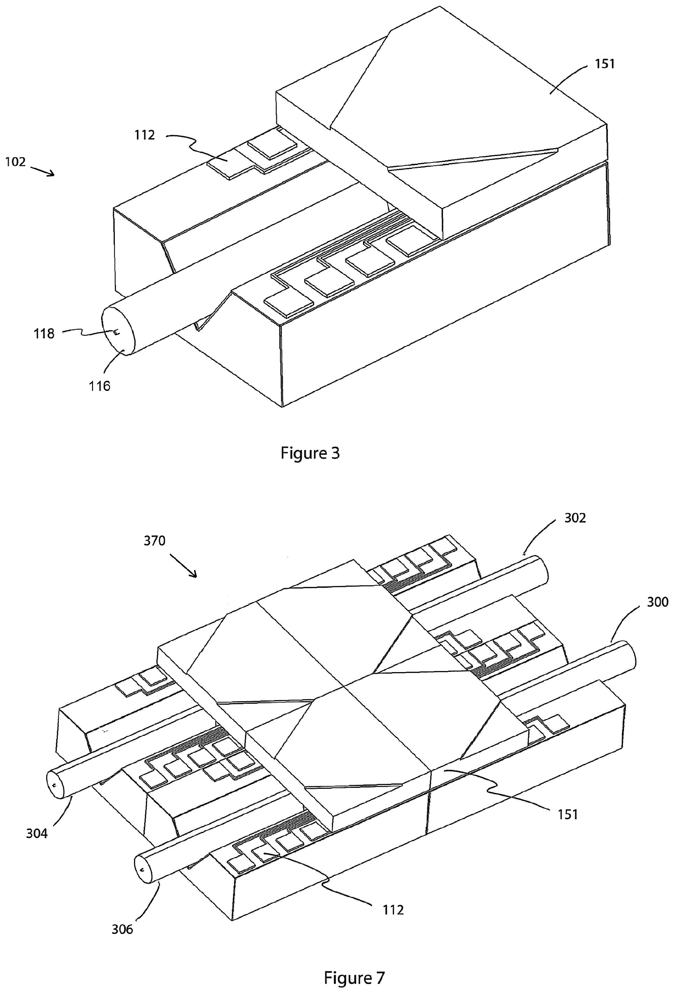

In one possible embodiment shown in **Figure 3**, a beam steering device **102** can be mated with optical element **151**. If optical element **151** possesses a net negative diopter, then the scan angle of emerging two degree of freedom beams can be increased. In general, optical element **151** may take the form of a doublet lens, singlet lens, compound lens, lenslet array, positive lens, negative lens, achromat, asphere, freeform lens, GRIN lens, reflective or refractive element, multi-dielectric stack, prism, emitter, absorber, light sensor, temperature sensor, magnetic sensor, magnetic coil, photodiode, liquid crystal display, photo darkening element, active or passive filter, or any other optical, electo-optical or electrical element. Optical element **151** could also take the form of a variable focus lens where one or more optical sub-components could be controllably moved in a direction normal to, or in a direction lateral to or with any of three degrees of rotation with respect to surface **103**. Further, relative displacements between the elements of such a variable focus lens could be controllably provided with piezoelectric stacks, acoustic forces, magnetic forces, electrostatic forces, thermal forces, shape memory forces, or any other application of force that is known to those in the art. In yet another embodiment, beam steering device **102** does not require and is not coupled to optical element **151.**

**Figures 4, 5, and 6** show the cross-section of a Variable Focus Optical Element **615**, configured to precisely and incrementally control the shape of its reflective surface from concave to convex and any shape in-between. In a simple form, the surface shape could be spherical, a revolved conic section, or aspherical. Alternate shapes and rotationally non-symmetric contours could be achieved by adjusting the degree and location of upper surface internal stresses using modifications to deposition and plasma etching parameters, including relief cuts. Regardless, one basic function of a VFOE **615** is to control the degree of concavity or convexity of its surface such that the vergence of a reflected beam may be precisely controlled, or equivalently, the positive or negative focal length may be controlled. For example, this can be useful for focusing a beam that strikes reflective concave surface **262** as shown in Figure 6, or to simply reflect a beam, unmodified, off flat surface **261** in the case of Figure 5, or to cause an impinging beam to increase its divergence after striking reflective convex surface **260** as shown in Figure 4. In Figure 4, negative charges **270** and **272** are injected onto the conductive surface **250** and reflective convex surface **260**, thereby providing a repulsive force that causes the thin film diaphragm to bulge outward. Similarly, in Figure 6, opposite charges **252** and **254** are placed on conductive surface **250** and reflective concave surface **262** thereby providing an attractive force that causes the thin film diaphragm to be drawn inward. If no charges are present, then the reflective thin film reflective flat surface **261** remains undisturbed, as in Figure 5. For a single mode beam on the order of 10 microns in diameter, a small VFOE can respond very quickly to input commands. Insulator **258** can be formed on substrate **256** using standard micromachining techniques. Etching a hollow cavity beneath the optical surface may be accomplished by providing a series of perforations about its circumference. Alternatively, a preformed cavity could be bonded to the upper surface optical components as an assembly step. There are many equivalent ways in which a device of this type can be fabricated as known by those skilled in the art. If conductive, the optical surface might also provide for actuation forces if nested in a gimbaled frame. The optical surface of a VFOE **615**, might take the form of a simple micromirror, a multidielectric stack, a metamaterial, an optical grating array, a static convex or concave optical element, an actively variable concave or convex optical element, or any other optical element that can transmit, absorb, polarize, upconvert, downconvert, lase, emit, refract or reflect electromagnetic radiation.

Other methods of force generation may be used in addition to electrostatic forces. For example, micro-coils formed on surfaces **260**, **261**, or **262** and **250** can produce magnetic forces sufficient for deflection, or a magnetic material could be utilized on a surface facing a micro-coil to provide these forces. Gas or liquid pressure within the cavity could also provide controllable deformation forces. These pressures could be provided by a high or low pressure source, or could be produced by a hot or cold sink imparting work on the fluid. Similarly, thermal bimorph, shape memory effects and phase transformation of some solids such as wax could also provide these deflection forces. In fact, any force implementation to produce controllable deflections of the reflecting surfaces may be used.

**Figure7** shows one embodiment of a quad array **370**, defined by a grouping of four beam steering devices **102**, which are provided with optical elements **151**. Optical elements **300**, **302**, **304** could deliver the single frequency colors of say, red green and blue to the steering micromirrors, **108**. The fourth optical element **306**, can be used to expand the color gamut with an additional color such as yellow, or may be used as an observation channel to receive, record, or quantify incoming light signals from the eyes to determine, in one example, the reflected position of the pupil with respect to the head, and in another example, receive reflected, refracted or scattered light from within the eye, for say, medical purposes. As before, pads **112** deliver, in one example, voltage control to independently steer each of the four micromirrors **108**. Any of these optical elements **300**, **302**, **304** or **306** could be used as observation channels, or could carry a specific wavelength, or any combination, or superposition of wavelengths. In another embodiment, quad array **370** is composed of one or more beam steering devices **102**.

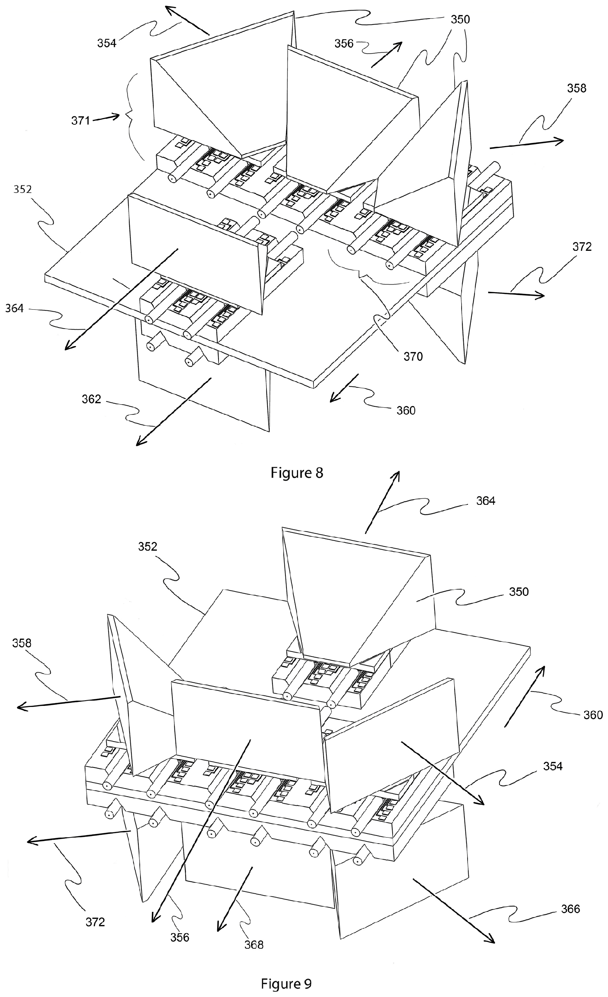

**Figures 8 and 9** show one possible configuration for an array of sub-projectors **371.** The grouping, taken as a whole, will be referred to as a scanning projector **440**. As two degree of freedom beams emerge from quad array optical scanner **370**, they are projected up and away from upper surface **103**, and then deflected in a substantially horizontal direction by right angle turning prism **350**. As described previously, turning prism **350**, is bonded to the surface of the quad array **370**, and is precisely aligned over the emerging beams with the help of registration grooves **152**. This creates one example of a sub-projector **371**. It can be appreciated that sub-projector **371** may simply consist of one or more beam steering devices **102**. Eight sub-projectors **371,** are placed on a common substrate **352**, and are fixed at selected relative angles with a high degree of precision. In this example, the three sub-projectors **371**, on the upper surface of substrate **352** and facing rearward, cover approximately 180 degrees of scan angle as exemplified by vectors **354**, **356**, and **358**, wherein each sub-projector **371**, provides approximately 60 degrees of scan angle. A single sub-projector **371**, on the upper surface faces forward, and towards the eye, as indicated by vectors **360** and **362**.

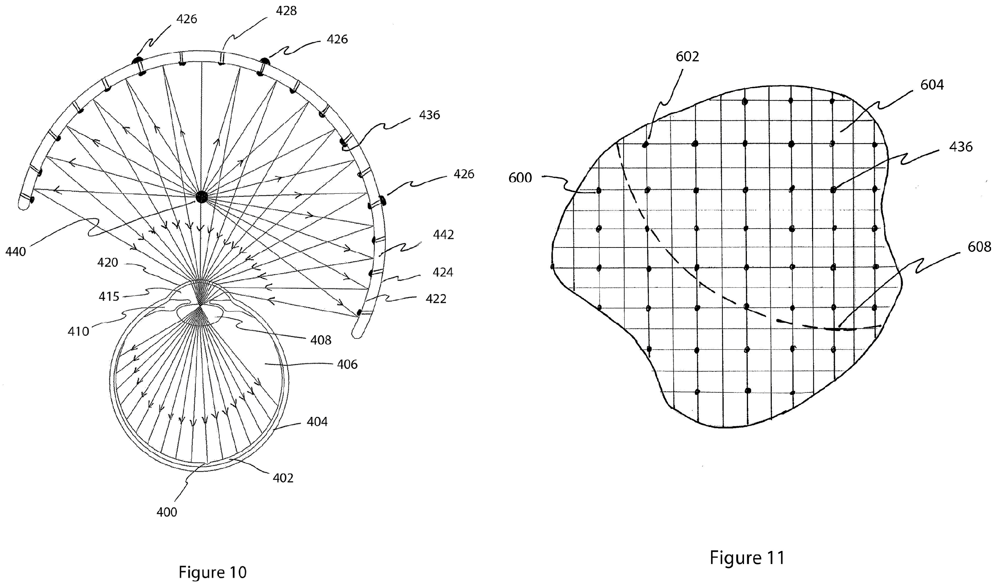

In this one embodiment, a symmetric configuration is established with four more sub-projectors **371**, on the lower surface of **352**, thereby providing an additional scan space defined by vectors **366**, **368**, and **372**. This configuration allows for approximately 180 degrees of horizontal scan and 120 degrees of vertical scan. The forward facing sub-projectors **371**, project directly into the eye so as to "hide" scanning projector **440** from a forward gaze. Figures 8 and 9 show merely one possible combination of an array of sub-projectors **371.** In fact, a single capable beam steering device **102** affixed to a headset in close proximity to the eye could also provide a full immersion, wide angle view. It can be appreciated that any device that can project a two dimensional image could also substitute for a sub-projector **371**, and that a sub-projector array may be composed of a single, or a multitude of sub-projectors. It may be noted that by dividing the full visual field, as shown in Figure 10, into sectors that correspond to sectors covering the retina, and by utilizing a multitude of sub-projectors to individually address these sectors, a highly parallel projection system is created. This provides for a great improvement in dynamic performance in that every individual sub-projector, having a smaller area to project to, can complete its task more rapidly.

**Figure 10** shows the top view of a horizontal plane bisecting the ray traced optics of one possible configuration for an immersive optical scanning system, and its relationship with the eye. In this view, the ray traces are approximately valid for any other plane whose normal vector is orthogonal to the optical axis of scanning projector **440**. Although the ray arrows show a path from scanning projector **440** to the retina **402**, as with most optics, the ray paths are reversible and photons can travel in either direction. It may be noted that the angular extent of reflector body **442** is approximately 110 degrees to the right and 60 degrees to the left, representing the full, horizontal field of view for a human right eye gazing straight ahead. Not shown is the approximately 50 degrees upwards and 70 degrees downwards extent of reflector body **442**.

In one embodiment, scanning projector **440** is placed near the center of a revolved approximately conic section reflector body **442**. A first surface mirror **422** reflects beams emanating from scanning projector **440** back towards the pupil, and ultimately, onto the retina. The outer surface **424** of reflector body **442** is shown supporting forward and lateral looking, wide angle cameras **426**. With sufficient resolution, these cameras could provide a similar field of view and binocular vision one could see if no display were present. By forwarding this visual data stream to scanning projector **440**, and directing the reflected beams via wide field reflector body **442** directly into the eye, the illusion of headset transparency would be complete for distant objects. These cameras might also detect other wavelengths of light including UV and IR. They might also gather depth of field information or provide telescopic and microscopic functions. In addition, other sensors might provide "synthetic vision" by sensing magnetic, radio, proximity, capacitive, thermal, electric, acoustic, sonar, or radar data to name just a few energy fields. One can appreciate that any radiation source that is detectable may be viewable with this embodiment or any number of variations. Other form of abstract data could also be arranged for "synthetic vision" presentation such as thermal profiles or a map of tactile information.

In one possible configuration, a wide angle environmental data set may be gathered from cameras and sensors, and arranged in a visual format with high speed data processors. Any virtual reality data may then be merged with the environmental data. The resulting data set might then be divided into a number of sectors each representing a specific location on the retina, with the totality of all sectors representing full retinal coverage. Referring to Figures 8 and 9, the six rearward facing sub-projectors could be assigned a total of six sectors of data, with the remaining two forward facing sub-projectors receiving a small subset of sector data to recover the field of view they themselves obscure. The six rearward facing sub-projectors **371** then emit beams corresponding to their data sets that reflect off first surface reflector **422** and impinge on the cornea **420**. Similarly, the two forward facing sub-projectors **371** also emit their data set beams, which directly impinge on the cornea **420.** The light beams then pass through the aqueous humor **415**, past the iris **410**, through the crystalline lens **408**, through the vitreous humor **406**, and onto the surface of the retina **402**.

In another embodiment, reflector body **442** may be transparent or translucent, and first surface reflector **422** can be a partial mirror. Performance levels can be adjusted by reconfiguring the type and number of components used. For example, in some versions of a pass through AR design, a single outward looking wide angle cameras **426** can be used for frame stabilization while two or more outward looking wide angle cameras **426** can be useful for AR, VR or MR designs.

With eye tracking information, it is possible to deferentially increase the bandwidth of a sub-projector **371**, whose sector data falls within the visual field of forward gaze. This is advantageous because visual acuity is by far, the greatest at the center of the visual field, as determined by the fovea **400**. And if bandwidth is restricted, dynamic reallocation may be in order.

In one eye tracking embodiment, the angular position of the pupil may be determined by using a pulse of IR light provided by one or more IR emitters **428** residing near the inner face, or around the perimeter of reflector body **442**. The IR light pulse might also be provided by the scanning projector **440** itself. Other wavelengths of light may be used as well. An array of eye tracking sensors **436**, disposed near the inner surface of reflector body **442**, may detect reflected light from the user's pupil and cornea. This information may then be used to deduce an accurate position of the eye relative to the reflector body **442**, and subsequently, the relative position of the eye to the head. The function of eye tracking sensors **436** might be replaced by an inward looking camera, or an observation channel as previously described in Figure 7. IR emitters **428** and eye tracking sensors **436** may be supplanted if scanning projector **440** provides both IR eye illumination and IR reflection analysis.

A camera or observation channel could also observe corneal reflection patterns, retina physiology, or the IR reflections emanating from an illuminated pupil to ascertain eye position.

In yet another embodiment, eye tracking might be enhanced by establishing fiducial marks directly on the cornea or sclera **404**. One possible configuration employs an inkjet that micro prints directly onto the eye with biocompatible fluorescing dyes. Other types of inks or dyes could be used as well. The marks could also be printed onto the eye by direct contact transfer, as with a stamp for example. It can be appreciated that one could employ many methods to print marks onto a surface. The positions of these marks could then be observed with one or more cameras, sensors, or observational channels. For aesthetic reasons, the dyes can be invisible under normal lighting conditions. However, when stimulated by the proper wavelength of light, these fluorescing fiducial marks, perhaps in conjunction with bandpass filters, might effectively provide a high contrast, non-ambiguous frame of reference for effectively tracking rapid eye movements. Using two or more micro dots, for example, could yield information for all three axes of eyeball rotation.

The shape of reflector **422** may be approximated by ray tracing backwards from the retina to the scanning projector **440**. An assumption is made here that a rod or cone cell's response to an impinging photon is invariant with respect to angle of impingement.

The following illustrates one approximation method for obtaining the surface form of a passive reflector that can redirect a ray of light originating from a projection point to rod and cone cells on the retina.
1) Obtain the family of vectors that is characterized by a ray trace originating from a rod or cone cell within a defined sector of the retina, wherein the ray proceeds through the center of the exit pupil and proceeds out from the cornea.
2) Select a point that lies a chosen distance from the cornea and that also lies on the visual axis when gazing straight ahead. This represents the point in space occupied by scanning projector **440**.
3) Define a sphere of a given radius, centered on the point of projection selected in step 2.
4) Select a vector emanating from the center of the retinal sector analyzed in step 1.
5) Find the 3D point of intersection of the vector selected in step 4, and the surface of the sphere defined in step 3.
6) Calculate, if it exists, the normal vector for a differential reflector surface element that will satisfy equal angles of incidence and reflection back to the projector.
7) Select another vector from set 1 and repeat steps 5 and 6.
8) Stitch together the correctly oriented surface elements found in steps 6 and 7. If the surfaces are not contiguous, then modify the initial projection radius until they are.
9) Repeat steps 7 and 8 until the full vector set in step 1 is exhausted.
10) If the resulting piecewise reflector surface is smooth and contiguous, repeat 1-9 to find all such sector surfaces and stitch together to form the finished reflector.

If the resulting surface cannot be made piecewise contiguous and smooth, then iterate to a solution in the following manner.
11) Increase or decrease the initial diameter of the projection sphere in step 3 and recalculate until a satisfactory surface is found, or
12) Move the point of projection closer or further from the cornea in step 2 and recalculate, or
13) Obtain a second, much larger set of vectors within the selected retinal sector that represent a ray emanating from a photoreceptor through any point within the exit pupil.
14) Select the smoothest surface previously found, and recalculate for the new set of photoreceptor vectors found in step 13.

If an acceptable reflector surface still cannot be found, then the addition of a corrector lens may be used.

A passive reflecting surface defined thusly, should provide a minimal vector set for full access to all photoreceptors in the eye. However, if a distortion free, true depth of field image is difficult to create using a passive reflector, or a passive refractive corrected reflector, then an adaptive reflective surface may be used instead. Once all visual and other data has been produced, gathered, and processed by high speed algorithms, the information is passed to scanning projector **440** which emits light beams in such a way that the bulk of photoreceptors are provided with photons having the correct intensity, color, timing, and relative positions to produce an illusion of visual immersion.

**Figure 11** shows another possible configuration for a high speed eye tracker, wherein the inner surface of reflector body **442**, may be covered with an array of photodiodes **436**. These photodiodes **436** may be interstitially placed between beam reflector areas **604**, or Micro Scanner Direct Projection Optical Element **820**. A short burst of IR radiation can be sent to the eye via IR emitters **428**, or scanning projector **440**. The resulting return signal may be projected onto the sensor array and the pupil's image can be found by comparing the strength of the signal from those sensors **602** that are in a "shadow", and those sensors that are in a brighter area, as is sensor **600** for example. With a fine enough coverage, a good geometric location and shape of the pupil circumference **608** can be determined, from which, the pupil radius and the center of gaze can be deduced. As photodiodes can respond very quickly to a signal, this would provide for a high speed eye tracker. It can be appreciated that any photon sensing element can substitute for a photodiode.

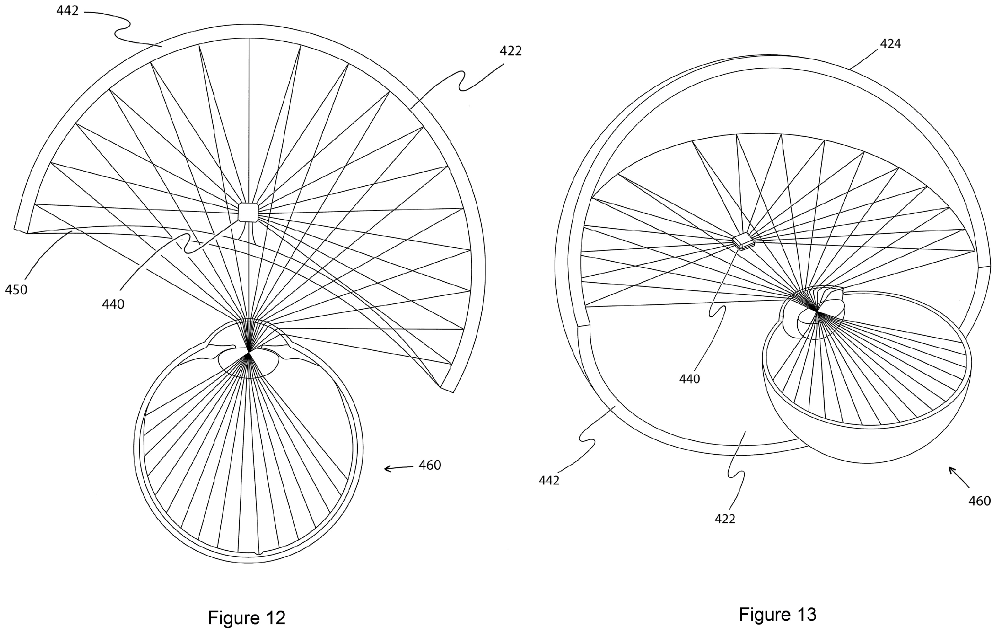

**Figure 12** shows one possible configuration for sealing an immersive optical projection device. The introduction of a refractive corrector plate **450**, provides for sealing a delicate first surface reflector **422** and scanning projector **440**, as well as possibly correcting for a user's vision problems, or for further refining projected beams as they ply their way towards the eye **460**. The reflector body **442**, may be hermetically sealed to the refractive corrector plate **450**, providing for a moisture resistant environment. It can be appreciated that a refractive corrector plate **450** might also be in direct contact with surface reflector **422**. In another embodiment, refractive corrector plate **450** can be a thin section bridging the open end of reflector body **442**, or extending from one edge to the center of reflector body **442,** for the purpose of mounting scanning projector **440**, and carrying electrical and optical signals to and from scanning projector **440.**

**Figure 13** shows an isometric perspective view of the reflector scanner imaging system and the relative positions of the eye **460**, the reflector body **442**, the scanning projector **440**, the first surface reflector **422** and the outer surface of the reflector body **424**. In this embodiment, no refractive corrector plate **450** is present.

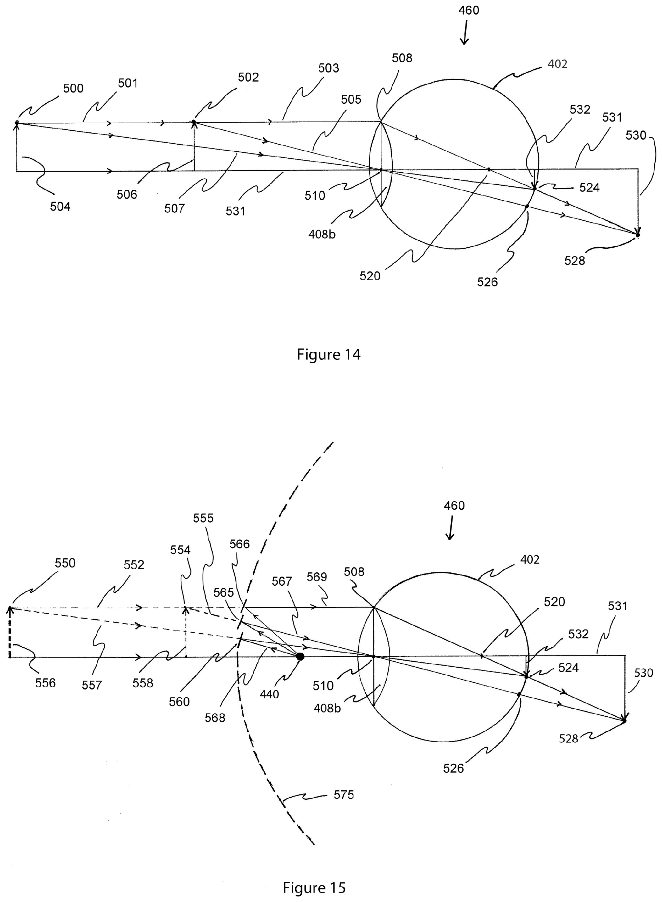

**Figure 14** shows the optical paths of a near object and the resultant images produced on, and behind the retina **402**. A vertical cross-section of the optical paths involving a distant object **504**, and a near object **506**, with respect to eye **460** is shown. In this view, the retina **402** is represented by a circle, and the crystalline lens and cornea are represented by a simple double convex equivalent lens **408b**, with a focal length found at point **520**. Using simple lens geometry, we select a horizontal beam of light **501** emanating from the tip **500**, of distant object **504**, and traveling parallel to the optical axis of the eye **531**. The beam progresses to point **508**, and is refracted through equivalent lens **408b**, passes through focal point **520**, and strikes retina **402** at tip **524** forming the tip of real image **532**. A ray **507**, passing from tip **500** through the center of equivalent lens **408b** remains unaltered and also reaches tip **524**. As expected, the real image **532** is inverted and focused on retina **402**.

A similar ray tracing process from the tip **502** of near object **506**, produces a real image **530** that comes to a focus behind the eye at image tip **528**. It can be seen that beams **503** and **505** emanating from near tip **502** pass through point **508** and center point **510** respectively of equivalent lens **408b**, and impinge on retina **402** at point **524** and tip **526** respectively. Because they do come to a focus on the retina, near object **506** appears blurred. If equivalent lens **408b** attempts to accommodate to the blurred image, it will thicken, thereby increasing its optical power, and move near real image **530** into sharp focus on retina **402**.

**Figure 15** shows how an adaptive reflector array **575** can produce a real image exhibiting a true depth of field by selectively steering beams from a projected virtual object. In Figure 15, distant virtual object **556** and near virtual object **558** replace the real objects **504** and **506** respectively, found in Figure 14. In addition, an adaptive reflector array **575** is placed in close proximity to the viewer's eye **460**. The adaptive reflector array has the property that a multitude of steerable optical elements covering the surface closest to the eye can be individually adjusted at will to modify the trajectory of an impinging beam of light. This can be useful for emulating the divergent ray properties produced by a nearby object, as well as the nearly parallel ray emanations from a distant object.

Beginning at the tip **550** of distant virtual object **556**, a horizontal virtual beam **552**, parallel to optical axis of the eye **531**, proceeds to point **508**, and is refracted through equivalent lens **408b**, passes through focal point **520**, and terminates at tip **524** on retina **402**. And virtual beam **557** departs from tip **550**, passes through the center point **510** of equivalent lens **408b**, and likewise terminates at tip **524** on the retina. Of course a real image is not formed since virtual objects do not produce photons. However, by precisely defining the theoretical direction, color, and intensity of a virtual beam at the exact point of intersection with adaptive reflector array **575**, and substituting, at each point on the surface of that reflector array, a real beam of light exhibiting those exact properties, then a real image **532** of the virtual object **556** can be formed.

To create a real image of distant virtual object **556**, a real beam **568**, having the correct properties of direction, intensity and color calculated for virtual object **556** at that point, is emitted by projector **440** towards adaptive steerable optical element **560**. The steerable optical element **560** is tilted slightly out of plane with respect to adaptive reflector array **575** insuring that beam **568** is directed towards point **524**. Similarly, a correctly calculated beam **569** is emitted from projector **440** and strikes tilted steerable optical element **566** and proceeds to point **508**, and onto retina **402** at point **524**.

And similarly, the ray trace for a virtual near object proceeds as follows. Beginning at the tip **554** of near virtual object **558**, a horizontal virtual beam **552**, parallel to optical axis of the eye **531**, proceeds to point **508**, and is refracted through equivalent lens **408b**, passes through focal point **520**, and terminates at tip **528** behind retina **402**. And virtual beam **555** departs from tip **554**, passes through the center point **510** of equivalent lens **408b**, and likewise terminates at tip **524** behind the retina.

To create a real image of near virtual object **558**, a real beam **567** having the correct properties of direction, intensity and color calculated for the virtual object at that point, is emitted by projector **440** towards adaptive steerable optical element **565**. The steerable optical element **565** is tilted slightly out of plane with respect to adaptive reflector array **575** such that beam **567** is directed towards focus point **528**. Similarly, a correctly calculated beam **569** is emitted from projector **440** and strikes tilted steerable optical element **566** and proceeds to point **508**, then point **520** and arrives at the point of focus at **528** behind retina **402**.

Because the adaptive reflector array **575**, in conjunction with projector **440**, can produce real images at any depth of focus from calculations derived from virtual objects, the eye should not be able to distinguish the difference between a real and virtual depth of focus. The images can appear just as real, and the crystalline lens can accommodate to the appropriate focus just as if it were produced by a real object.

In one embodiment, the adaptive reflector array **575** is comprised of single Degree Of Freedom steerable optical elements. That is, the rotation axis of any steerable optical element is normal to any vertical plane of cross section having center point **510** in common. This configuration can provide moderately good images. In another embodiment, multi DOF optical elements can be used to produce a greater range of optical properties, angles, and depths of field for more demanding images. An adaptive reflector array **575** employing multi DOF optical elements can achieve 20/20 visual resolving power by steering an approximately 2.5mm diameter beam into the eye, resulting in a 5 micron spot size on the retina. This configuration can also correct for astigmatism or any other off axis optical errors in the viewer's vision. In a general case then, an adaptive reflector array **575**, composed of two DOF or three DOF steerable optical element arrays can provide for a corrected, real image, with binocular cues and a true depth of field evoking an accommodation response for a single lens, and a vergence-accommodation response for a binocular configuration, thereby producing a total sense of visual immersion.

The following steps represent one possible process for calculating and projecting a real, near field image from a virtual object set.
1. Define a spherical surface S of radius Ri, centered on the pupil, where Ri is initially the closest focal distance in front of the viewer.
2. Find the surface intersections between the virtual scene components and the surface of sphere S.
3. Calculate the proper intensity, color, location, and direction of light beams produced by the virtual surface intersection elements found in step 2.
4. Calculate the tilt angles of all steerable optical elements on adaptive reflector array **575** to simulate the virtual elements found in steps 2 and 3.
5. Actuate those steerable optical elements and project the calculated beams from scanning projector **440**, onto those elements.
6. Increment Ri by a small amount (move the intersection with the virtual object further away).
7. Repeat the full process from step 1 forward until the full front to back scan is complete.
   OR --
1. Repeat steps 1 through 5, but scan all areas of the adaptive reflector array **575**, thereby including distant imagery with near objects during a single projection.
2. Continue with steps 6 and 7 as above.

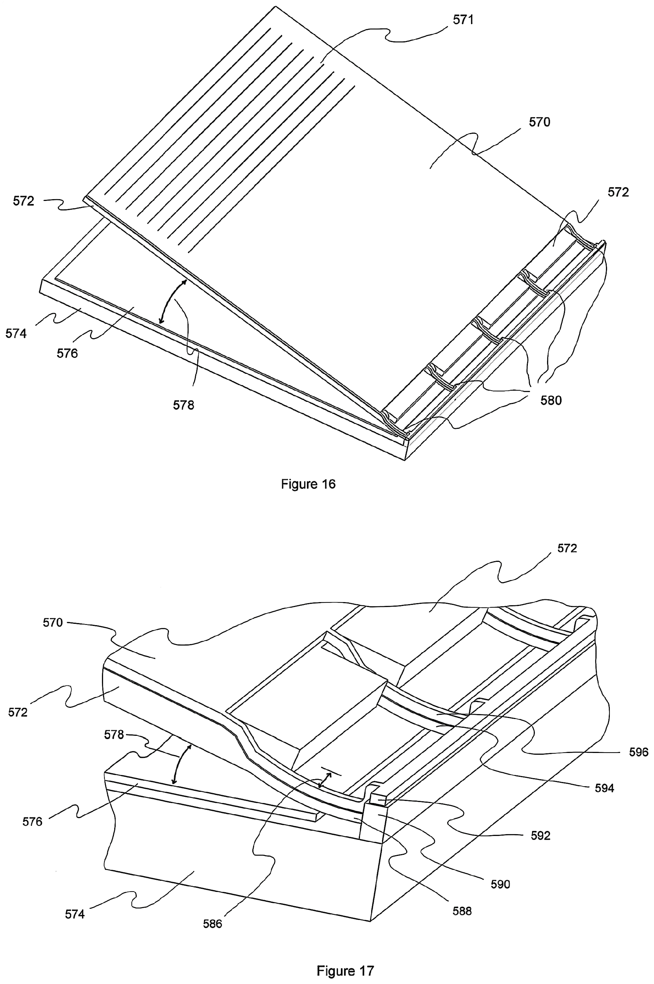

**Figure 16** shows one embodiment of a single degree of freedom V-Gap Optical Element. The optical surface **571**, can take the form of a simple micromirror, a multidielectric stack, a metamaterial, an optical grating array, a static convex or concave optical element, an actively variable concave or convex optical element, or any other optical element that can transmit, absorb, upconvert, downconvert, lase, emit, refract or reflect radiation, or modify any other optical property.

In this embodiment, the VGOE is composed of an optical surface **571** that is supported by an upper substrate **572** that can be controllably opened to a v-gap angle **578** relative to a lower substrate **574**. In one configuration, a controllable, antagonistic force is established between hinges **580** and an electrostatic force provided by charges present on the actuator surface **570** of upper substrate **572** and actuator surface **576** on lower substrate **574**. If v-gap angle **578** is zero when the device is inactive, then the controlled introduction of like charges on actuator surfaces **570** and **576** will cause the v-gap angle to increase, overcoming the closing forces of hinges **580**. If the hinges **580** normally force the upper substrate **572** into a positive v-gap angle **578** with respect to lower substrate **574** with no charges present on actuator surfaces **570** and **576**, then the introduction of opposite charges placed on actuator surfaces **570** and **576** will provide a v-gap closing force to overcome the hinges **580** opening forces. In either case, a precise v-gap angle **578** can be established by controlling the charges present on actuator surfaces **570** and **576**. It can be appreciated that magnetic forces could be substituted for electrostatic forces, thereby producing the same control of v-gap angle **578**. Equivalently, hinges **580** might be comprised of a thermal bimorph, a piezoelectric bimorph, or a shape memory element, thereby providing an opening or closing motion to control v-gap angle **578** without the use of electrostatic or magnetic driving forces. Indeed, a host of other forces, such as thermal expansion, local optical heating, or any other force, could also provide angular or linear displacement in a similar fashion.

In this one example, the variable capacitance established by the two actuator surfaces **576** and **570**, could provide a voltage feedback signal to actively control v-gap angle **578**. Similarly, any optical, magnetic, thermal, electrical, mechanical, stress, or strain sensing circuits monitoring hinges **580** or of v-gap angle **578** could also provide a feedback signal to precisely control the gap angle.

Optical surface **571** could take the form of an optical grating that produces bright colors from reflected white light wherein the reflected wavelength is dependent on the relative angle between the grating, the light source and the observer. In another embodiment, the frequency output of optical grating **571** could be controlled electronically wherein the spacing between each successive ruling can be varied. In yet another embodiment, various colors might be produced using an electronically variable thin film interference device wherein an electronically controlled gap between a transparent or translucent upper surface and a reflective lower surface is provided. The controllable gap might be a vacuum gap in one configuration or a media filled gap in a multitude of alternate configurations. In other configurations, the color of optical surface **571** could be controlled by magnetically, electrically, optically, or thermally varying a spectrally dependent reflecting micro structure.

**Figure 17** shows the hinge area of one possible configuration of a Single DOF VGOE. Given an electrically insulating lower substrate **574**, an actuator surface **576** is deposited, patterned and is addressable via electronic circuitry. A sacrificial layer (not shown for clarity) and an additional insulating layer are then deposited and patterned to form the cantilever support bar **590** and insulating upper substrate **572**. A controlled depth etch profile **586** is then applied to all hinge areas to adjust the overall thickness of insulating upper substrate **572** in the hinge area. This will have the effect of adjusting the spring rates of the final hinge layer profiles **588** and **594**. Any number of hinges **580** may support a v-gap optical element. Providing a stress gradient across the thickness of insulating upper substrate **572** with various deposition techniques may also allow a controlled depth etch profile **586**, to move variable angle **578** to a chosen static position, when the device is inactive. Actuator surface **570** may be deposited and patterned as before and may be electronically activated via address bar **592**. An additional insulating layer (not shown) may be deposited over actuator surface **570** followed by optical surface **571**. Any number of actuator and optical layers may be fabricated on upper substrate **572**, and may communicate with address bar **592** and external electrical circuits via areas of conduction represented by hinge area **596**. Once all layers have been patterned, the sacrificial layer is removed, thereby freeing upper substrate **572**, and allowing it to move to its static position.

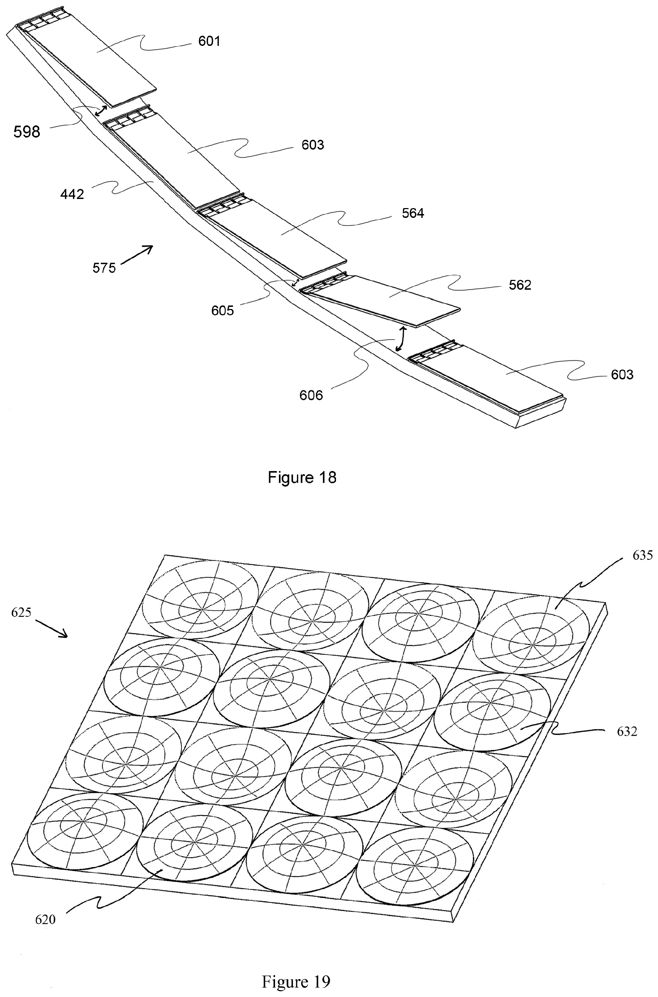

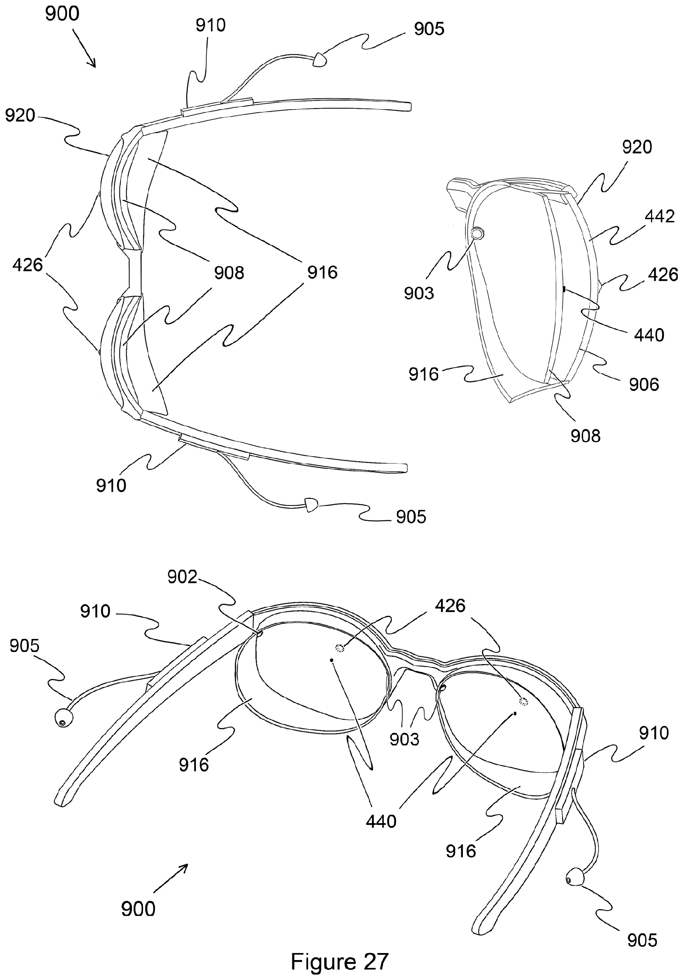

**Figure 18** shows a small cross section of one embodiment of an adaptive reflector array **575**. In this particular example, a small length of a single column of SDOF VGOEs is disposed on a section of reflector body **442**. In practice, this small array might continue in a linear fashion for perhaps hundreds or tens of thousands of elements. An entire adaptive reflector array **575** might then be composed of perhaps hundreds or tens of thousands of such columns placed side by side, effectively substituting for the passive, revolved approximately conic section reflector body **442** shown in Figure 27.

Two VGOEs **603** are shown in a fully closed state. Their optical surfaces are nearly parallel to the local surface of adaptive reflector array **575**. VGOEs **601**, **564** and **562** are shown driven to various precise angles **598**, **605**, and **606** respectively. In this way, the exact deflection angle of an impinging light ray will be controlled at each point on the surface of adaptive reflector array **575**. With SDOF VGOEs, the rotation axis of any steerable optical element may be normal to any plane of cross section having center point **510** in common (see Figure 15). The family of normal vectors exiting the surface of each optical element might be overly constrained for some applications, due to the compound curvature of the reflector body, such that propagating wave front aberrations might be excessive. Thus, in another embodiment, a multi DOF optical element might replace a single DOF element, or a combination of single and multi DOF optical elements could be utilized to create a higher order DOF adaptive reflector array **575**.

**Figure 19** shows one possible configuration of a Variable Focus Optical Element Array **625**, composed of an array of VFOEs **615**, as described in Figures 4, 5 and 6. Each VFOE is connected to its neighbor in a semi-rigid manner such that the optical axis of each VFOE is somewhat aligned with respect to its neighbors. The optical surfaces of each VFOE can vary in curvature. In particular, VFOE **620** is in the inactive state, producing a flat surface. In one possible example utilizing electrostatic actuation, VFOE **635** has opposite charges on its upper and lower surfaces, thus, the diaphragm surface assumes a concave shape. And VFOE **632** has been activated with like charges and its surface has assumed a convex shape.

Depending on the size of an individual VFOE, an array can shape individual beams to be less or more divergent with good fidelity. A VFOEA can also shape wave fronts and move image planes by dynamically controlling surface deformations at each point of the array. In most cases, the modifying effects of a VFOEA **625** on a large impinging beam, say 3mm, is the summation of the individual effects of the much smaller diameter VFOEs. A VFOEA **625** can take the form of a revolved approximately conic section reflector, a hemisphere, a convex reflector, a flat surface or any other shape.

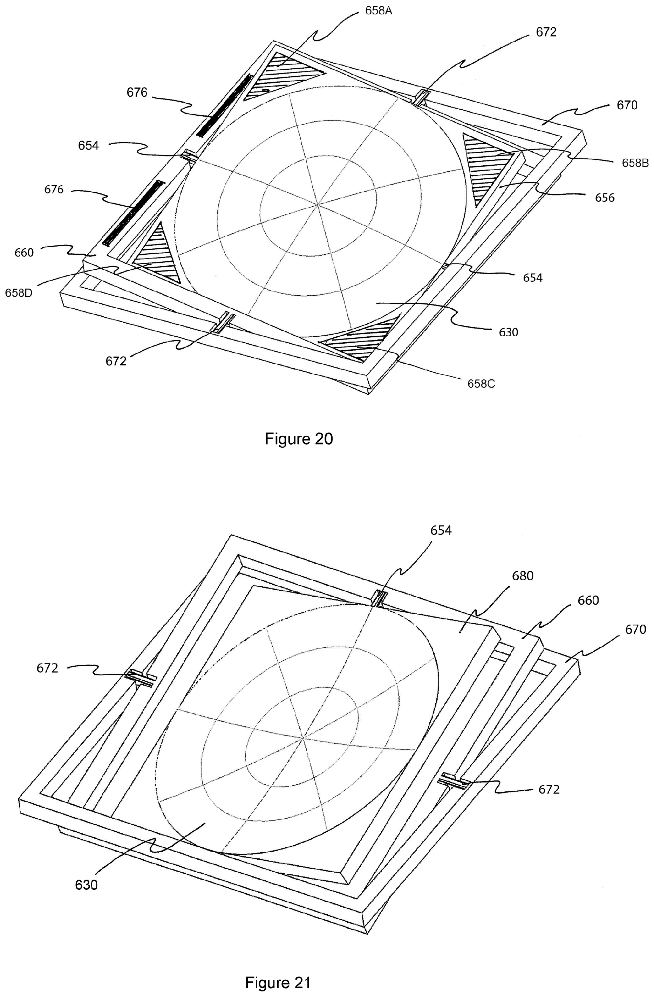

**Figure 20** shows a steerable Variable Focus Optical Element **656** in a double gimbaled configuration. In one embodiment, VFOE **656** provides similar optical functions as VFOE **615**, and is configured to be suspended in a frame constrained by torsional gimbal bearing pair **654** and **672**. Each gimbal torsion bearing pair restrains vertical movements while permitting rotations with a single DOF. Conductive lines, not shown, providing electrical communication to actuator pads **658A**, **658B**, **658C**, **658D** from the outside world, as well as electrical communication to optical surface **630**, are in contact with, and pass over these gimbal bearings. In this example, the optical surface **630** has been activated to a convex state.

Actuator pads **658A**, **658B**, **658C**, and **658D** are arranged on the four surface corners of VFOE **656** to provide unbalanced actuation forces that can move VFOE **656** with two DOF about the rotation axes defined by torsional gimbal bearing pair **654** and **672**. If acting in pairs, actuator pads **658A** and **658B** can counter or enhance the rotation forces produced by actuator pads **658C** and **658D** causing a pure rotation about an axis defined by gimbal bearing pair **654**.

An outer gimbaled frame **660**, holds VFOE **656**, and permits rotation about the axis defined by gimbal bearing pair **654**. A fixed outside frame **670**, permits rotation of outer gimbaled frame **660** about a second axis of rotation that is substantially orthogonal to the first, and defined by gimbal bearing pair **672**. All electrical paths can travel over or upon this second set of gimbal bearing pairs **672**. Actuator pads **676** (lower pads not shown due to obscuration) may provide electrostatic forces for rotating VFOE **656** to a selected angle about the axis of gimbal bearing pair **672.**

It can be appreciated that any number of alternate configurations for torsional bearings, optical surfaces, actuator elements, communication traces, and material compositions of the components may be substituted without altering the overall function of this or any other gimbaled embodiment. In another embodiment, VFOE **656** could be in a single gimbal configuration. It can also be appreciated that an optical element with a fixed, predefined surface shape could also replace the VFOE, resulting in a steerable element with a fixed focus. And as before, magnetic, thermal bimorph, thermal expansion, local optical heating, piezoelectric, shape memory deformation or any other method for imparting a force can be an equivalent substitute for imparting angular or linear displacements for a steerable optical element**.**

**Figure 21** shows a steerable Variable Focus Optical Element **680** in a double gimbaled configuration, similar to the discussion of Figure 20, but with VFOE **680** having surface **630** in a concave state. In this embodiment, VFOE **680** is constrained by torsional gimbal bearing pair **654** to outer gimbaled frame **660.** And outer gimbaled frame **660** is constrained by torsional gimbal bearing pair **672** to an externally fixed outside frame **670**. Rotation axes, communication lines, actuator pads, alternative configurations, and alternative force producing methods are similar to the discussions of Figure 20. It can be appreciated by those skilled in the art that the type of bearings, the number of bearings, the number of DOF motions, the location of their axes, the directions of rotation, the type, location, and the external shape of the components themselves may take many different, but equivalent physical forms without altering the overall function of this or any other gimbaled embodiment.

It can also be appreciated that a half ball micro lens or a vertical GRIN lens, or any other refracting lens could be fabricated or attached to a mirrored surface thereby providing steerable focusing or defocusing power as well.

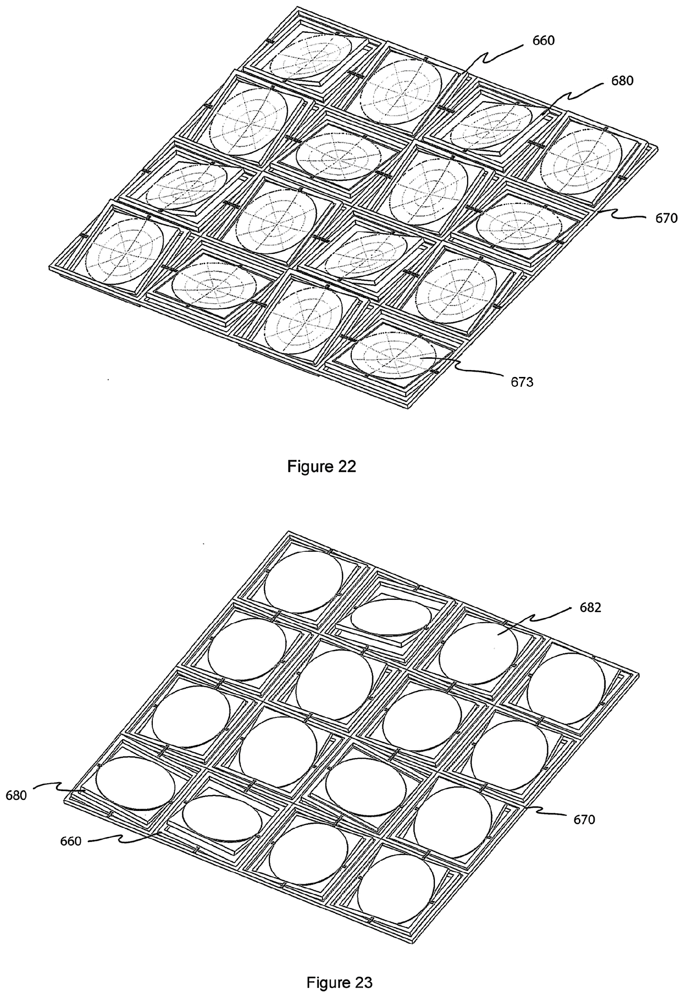

**Figure 22** shows a small portion of an array of steerable Variable Focus Optical Elements **680** in a concave state and at various angular positions. In one embodiment, a full array may be formed as a contiguous flexible sheet that may be bonded to, or be formed into the shape of, reflector **442**, or any other useful shape. In another embodiment, an array might be created by joining individual steerable VFOEs **680**, or groups of steerable VFOEs **680** together, then bonding them to a surface. In yet another embodiment, one or more individual steerable VFOEs **680** may also be directly bonded to a surface such as reflector **442**, without requiring immediate contact with one another.

In one particular array embodiment, individual steerable VFOEs **680**, may control their surface contours individually or as a synchronized group. In yet another embodiment, steerable VFOEs **680** can be replaced with steerable, fixed curvature optical elements **673** having predetermined contours. In yet another embodiment, a combination of steerable VFOE's **680** and steerable static curvature optical elements **673** may populate a steerable array. Each individual steerable VFOE **680** within the array of Figure 22, may be configured for single DOF motion, two or more DOF motions, or a combination of single DOF motion and two or more DOF motions.

A concave reflector profile is advantageous for the reflection of small diameter laser beams, as unavoidable divergence due to diffraction is inversely proportional to beam diameter and can be maintained with positive focusing elements, allowing for a small spot size at close distances. The average size of a photoreceptor is approximately 6 microns. For 20/20 vision, the smallest angle of resolution is approximately 60 arc seconds. Therefore, if 20/20 resolving power is the goal, then a 2.5 mm diameter beam, for example, should be collimated to approximately one degree of divergence to form a 5 micron diameter spot on the retina with a crystalline lens **408** effective focal length of approximately 17 mm. The angle subtended from a point 6 inches distant from a 2.5mm diameter pupil is approximately 1 degree.

**Figure 23** shows one embodiment for a double gimbaled, flat optical element array. Features, operations, and alternate embodiments are similar to the arrays and their components previously discussed. In one embodiment, the optical surface **682** of all beam steering optical elements **680** are in a flat state. This can be achieved by the dynamic control of a VFOE or by the use of a statically defined flat surface. Outside frame **670** is fixed with respect to movable outer gimbaled frame **660**, and optical element **680** can move with respect to outer gimbaled frame **660**. A flat mirror state can be quite useful in a reflector array designed for dynamic focusing of portions of the total reflector surface as described in Figure 15. Of course, beam steering optical element **680** can be of any external shape including rectangular or square.

The optical surface **682**, can also take the form of a simple micromirror, a dynamic VFOE, a multidielectric stack, a metamaterial, a static or dynamically controlled optical grating array, a static convex or concave optical element, or any other optical element that can transmit, absorb, polarize, upconvert, downconvert, lase, emit, refract or reflect electromagnetic radiation in any way. In addition, the method of action should not be limited to electrostatic forces exclusively. Magnetic, thermal bimorph, thermal expansion, local optical heating, piezoelectric, shape memory deformation or a host of other forces could also be substituted to provide angular or linear displacement in a similar fashion.

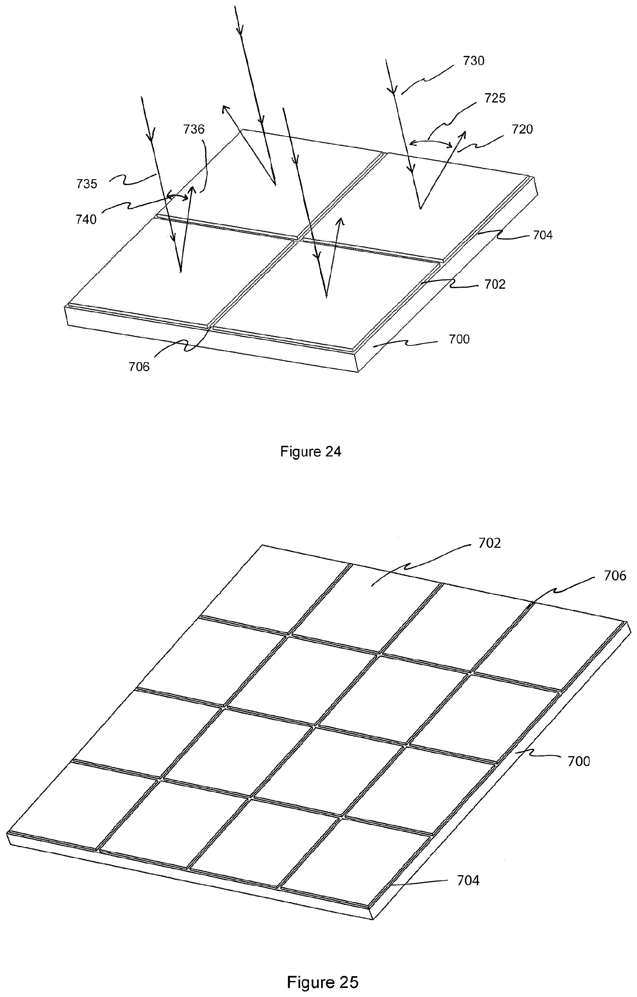

**Figure 24** shows one possible configuration for a small array of metamaterial reflectors. Metamaterials have shown a promising potential for having the ability to vary n, a measure of their refractive coefficients for electromagnetic radiation. In the right configuration, beam **735**, incident on a beam steering metamaterial reflector **702**, can be electronically reflected by an angle **740**, resulting in beam **736** at one potential while incident beam **730** can be electronically reflected by a different angle **725**, resulting in beam **720** at a different potential, on a different plate. The simple configuration shown consists of an engineered thin film nanostructure that can be made to alter the index of refraction at will. In this one embodiment, small pads of index changing metamaterial reflector **702** are fabricated on substrate **700** and may be isolated from one another by trenches **706**. Each metamaterial reflector **702** may be controlled by individually addressable control plates **704** positioned beneath each metamaterial reflector **702** and upon substrate **700**. Other equivalent embodiments of metamaterial reflectors, control plates, electrical connections and substrates can take any shape, or any curvature, and can be created from many different materials without deviating from the scope or functions as described.

**Figure 25** shows one embodiment of a larger array of metamaterial reflectors **702** disposed on substrate **700** and lying over control plates **704**. The array can be made sufficiently large to accommodate a large visual field with high acuity. The upper limit of beam deflecting elements could be larger than the total number of photoreceptors in the human eye, or 15 million. Substrate **700** may take any 3D curved form, such as a revolved approximately conic section, to provide the beam forming properties as described in the Figure 15 discussion and represented by adaptive reflector array **575**. Other equivalent embodiments are as described in the Figure 24 discussion.

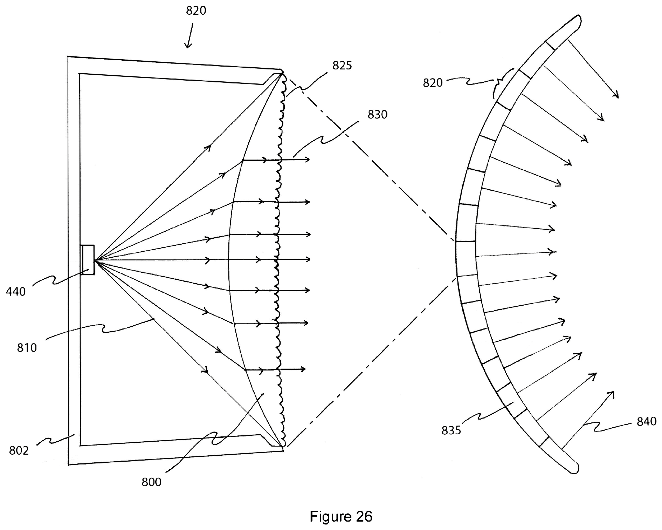

**Figure 26** shows a breakout view of one embodiment of a single Micro Scanner Direct Projection Optical Element **820**. Also shown is vertical column **835** of concatenated MSDPOEs **820**. In this view, MSDPOE **820** includes a light isolation housing **802** that provides optical isolation from neighboring MSDPOEs, and supports a projection optical element **800**, and a scanning projector **440**. Electrical and optical signal pathways (not shown), may convey signals to internal components through the walls of light isolation housing **802**. Projection optical element **800** having a corrective first surface nearest scanning projector **440** and an optional micro lens modified second surface nearest the eye **460**, may be hermetically sealed to light isolation housing **802** in one embodiment.

Similar to the discussion of Figure 18 with respect to adaptive reflector array **575**, a multitude of vertical columns **835**, can be joined side-by-side such that a compound curved screen may be created that can provide a close proximity, full immersion projection field. In one embodiment, the compound curved screen may be similar in shape to reflector **442**. It can be appreciated that an arrayed configuration of MSDPOEs **820**, can take any shape, and may incorporate any number of MSDPOEs **820** of any size.

In one possible embodiment, a MSDPOE array may operate in the following manner. Light beams of controllable divergence **810**, are emitted by scanning projector **440**. These beams then strike the corrective first surface of projection optical element **800** and are refracted to a more convergent state. The beams then exit the second refractive surface of projection optical element **800**, and may be further refined by an optional micro lens array **825**, such that the vergence of each exit beam **830**, may be modified further before striking the retina.

Each MSDPOE may be rigidly affixed to its neighbor in a way that orients all exit beam axes **840** to intercept the cornea at the proper angle, thereby producing a properly immersive projection directly onto the retina.

It may be noted, that exit beam axis **840** is approximately normal to the exit surface of projection optical element **800** and may not depart at the proper angle for all simulated visual field conditions. To correct for this possible situation, one might further employ an array of steerable flat optical elements **682** as shown in Figure 23. In this implementation, one might simply replace the flat reflectors **682** supported in the double gimbaled frame **660** with micro lenses. A modified field, and improved exit beam direction might then be achieved by introducing this refractive beam steering array in place of the micro lens array **825**.

It can be appreciated that MSDPOE **820** could be comprised of any combination of refractive or reflective elements being of active or passive design, and having a variety of shapes and sizes without limiting the scope or purpose of the described functions.

For instance, in another embodiment, scanning projector **440** could be relocated from the back wall of light isolation housing **802** to the first surface of projection optical element **800**. The back wall of light isolation housing **802** might then be modified to take the form, for example, of a revolved approximately conic section reflector. Beams of controllable divergence **810** would then reflect off of this surface and pass through the first surface of projection optical element **800** in an optical path somewhat analogous to Figure 12. And in yet another embodiment, by combining this configuration with the refractive beam steering array described above, one could provide a compact, MSDPOE **820** with a near ideal vergence and exit angle for any exit beam **830**.

**Figure 27** shows a top view of one possible configuration for system integrating glasses **900** in the upper area, an isometric view of the glasses in the bottom part of the Figure, and a cross sectional view of a right lens in the upper right area.

The scanning projectors **440** are shown for each of the left and right eyes. The scanned beams may reflect off any variety of reflector surfaces **906**, described herein. A comfortable light isolation shield **916** could be replaceable and perhaps custom fit for each individual, incorporating a breathable, light baffle design. If needed, eye tracking cameras **902**, placed on an angular ring could be provided to view the pupil in the usual way. The eye tracking cameras **902** could also be placed on each reflector surface **906** if small enough to not be intrusive. Outward looking cameras **426** are shown, and if properly distributed on the outer surface and of high enough resolution, could provide video input to the wearer that would emulate what one would see if not wearing the glasses. This view could also be combined with purely synthetic images to give a sense of augmented reality, or a pure virtual view without camera data. Corrective lens **908** also provides support for scanning projectors **440**. To complete the full immersion effect, one or more speakers **905** in the form of earbuds, for example, could be employed.

The integrated system may include frames, scanning projectors **440**, data processors, power, and communications modules. In another embodiment, data processing, power, and communications functions could be combined into a single hybrid module **910** that can be either on or off the frames. In other embodiments, additional system components might include, but are not limited to, a reflector body **442**, outward looking cameras **426**, inward looking cameras or eye tracking cameras, external displays, radio transmitters, IR transmitters, speakers, microphones, refracting optics, reflecting optics, corrective lens **908**, waveguides, fiber optic components, micro optic components, light sources, optical filters, software, and sensors **903** to detect motion, position, location, GPS signals, environmental conditions, humidity, temperature, wind speed, radio signals, pressure, tactile information, magnetic fields, heat, sound, visible light, UV, IR, ionizing radiation, radioactivity, or any other quantity that can be sensed, observed or measured.

Weight and costs may be reduced by moving many functions off frame. For example, cloud based computations could be wirelessly transmitted to onboard electro optical, communications and power modules. Power could also be delivered wirelessly through induction. Or all support functions could be moved off frame wherein a fiber optic and wire cable might carry electrical and visual data directly to the projectors.

For improved social acceptance, an external view of one's eyes through each lens, as perceived by a passerby could be achieved by, in one embodiment, acquiring images of the wearers eyes with inward facing cameras and displaying them on a LCD, LED, OLED, or any other type of display placed external surface **920.**

It can be appreciated by those skilled in the art that there are limitless combinations of the systems, subsystems and components described herein, that may be equivalent in their ability to deliver an integrated, visually immersive, audio immersive, photoreceptor density limiting, wide angle, full spectrum, binocular, real optical depth of field, imaging system at a high level of complexity and cost, to an integrated, visually immersive system at a lower level of complexity and cost.

Although the above descriptions contain much specificity, this should not be construed as limitations on the scope and spirit, but rather as an exemplification of several embodiments thereof. Many other variations are possible and modifications of the embodiments will occur to those skilled in the art. Accordingly, the scope should be determined not by the embodiments illustrated, but by the appended claims and their legal equivalents.

The invention is described again in the following clauses.
1. An immersive optical projection device comprising:
   an eyewear frame supporting at least one scanning projector,
   said scanning projector comprising:
      a light source,
      a multi-degree of freedom steerable micromirror and,
   a revolved approximately conic section reflector surface,
      wherein an array of individually controllable micromirrors is disposed on said revolved approximately conic section reflector surface and,
   a refractive correction lens affixed to said eyewear frame,
      wherein said refractive correction lens is sealed against said revolved approximately conic section reflector surface, thereby forming a sealed cavity protective of said revolved approximately conic section reflector surface and said scanning projector,
      wherein said scanning projector is affixed to said refractive correction lens and within said sealed cavity,
   such that a beam of light produced by said light source, and directed by said multi-degree of freedom steerable micro mirror is directed towards said revolved approximately conic section reflector surface and strikes said array of individually controllable micromirrors, and is further directed through said refractive correction lens into a wearer's eye.
2. An immersive optical projection device comprising:
   an eyewear frame,
   at least one revolved approximately conic section reflector surface,
   at least one scanning projector comprising:
      at least one light source,
      at least one multi-degree of freedom beam steering device and,
   a refractive correction lens affixed to said eyewear frame,
   wherein said scanning projector is affixed to said refractive correction lens, and said refractive correction lens is sealed against said revolved approximately conic section reflector, thereby forming a sealed cavity protective of said revolved approximately conic section reflector and said scanning projector,
   such that a beam of light produced by said light source, and directed by said multi-degree of freedom beam steering device is directed towards said revolved approximately conic section reflector surface, and is further directed through said refractive correction lens into a wearer's eye.
3. An immersive optical projection device comprising:
   an eyewear frame,
   at least one revolved approximately conic section reflector surface,
   at least one scanning projector comprising:
      at least one light source,
      a beam divergence modulator
      at least one multi-degree of freedom beam steering device,
      wherein a beam of light produced by said light source is reflected off said beam divergence modulator, and said beam of light is altered to become a modified beam and proceeds to said multi-degree of freedom beam steering device and is further directed away from said scanning projector and,
   a refractive correction lens affixed to said eyewear frame,
   wherein said scanning projector is affixed to said refractive correction lens, and said refractive correction lens is sealed against said revolved approximately conic section reflector, thereby forming a sealed cavity protective of said revolved approximately conic section reflector and said scanning projector,
   such that said modified beam is directed towards said revolved approximately conic section reflector, and is further directed through said refractive correction lens into a wearer's eye.

## Claims

1. An immersive optical projection system comprising:
- a frame supporting one or more projection optical elements, wherein each projection optical element comprises:
- at least one scanning projector (440), the scanning projector (440) comprising:
- a light source (116); and
- a multi-degree of freedom steerable micro mirror (108); and
- one or more optical elements;
wherein for each of the projection optical elements, light from the light source is reflected by the multi-degree of freedom steerable micro mirror to the one or more optical elements.

2. The immersive optical projection system of claim 1 wherein the frame comprises an eyewear frame.

3. The immersive optical projection system of claim 1 wherein the frame supports a plurality of projection optical elements.

4. The immersive optical projection system of claim 3 wherein the plurality of projection optical elements are arranged to form an approximately conical surface.

5. The immersive optical projection system of claim 1 wherein the one or more optical elements comprise a reflector.

6. The immersive optical projection system of claim 1 further comprising:
a lens disposed after a point (120) and prior to the steerable micro mirror to modify beams of the light from the light source to dynamically control divergence of the beams.

7. The immersive optical projection system of claim 6 wherein the lens comprises one of:
- a ball lens;
- a GRIN lens; or
- a variable focus lens.

8. The immersive optical projection system of claim 1 further comprising:
an array of variable focus optical elements (625) disposed on a curved surface to modify a vergence of an impinging beam of light from the multi-degree of freedom steerable micro mirror.

9. The immersive optical projection system of claim 8 wherein each variable focus optical element is one of a group consisting of:
a micromirror, a multidielectric stack, a metamaterial, an optical grating array, a static convex or concave optical element, an actively variable concave or convex optical element, or any other optical element that can transmit, absorb, polarize, upconvert, downconvert, lase, emit, refract or reflect electromagnetic radiation.

10. The immersive optical projection system of claim 8 wherein each variable focus optical element has at least one degree of freedom.

11. The immersive optical projection system of claim 6 wherein the lens comprises a compound lens.

12. The immersive optical projection system of claim 11 wherein the compound lens comprises a micro lens array (825) to modify the vergence of light beams exiting the output surface of the compound lens.

13. The immersive optical projection system of claim 1 wherein:
the scanning projector is on a back surface of the optical element and directed towards a reflective surface defined by an inner wall of a container (802) that contains the scanning projector and the optical element.

14. The immersive optical projection system of claim 13 wherein the reflective surface is a near-conic reflection surface (422) to reflect light from the scanning projector (440) towards and through the optical element.

15. The immersive optical projection system of claim 13 wherein the optical element and the near-conic reflection surface form any at least one of any combination of refractive or reflective elements of any shape.

16. The immersive optical projection system of claim 14 wherein the near-conic reflection surface comprises:
- a variable focus optical elements array (625) to shape individual beams of light of the light source to be:
less or more divergent;
shape wave fronts and image planes for any predefined activation pattern across the array;
a surface deformation at each point of the variable focus optical elements array can be dynamically focused for purposes of beam and image shaping;
an overall curvature of the variable focus optical elements array can take the form of a conic reflector, a hemisphere, a convex reflector, a flat surface or any other predetermined shape.
